# EUROPEAN PATENT SPECIFICATION

(11) **EP 0 957 815 B1**
(45) Date of publication and mention of the grant of the patent: **29.05.2002**
(21) Application number: 97942919.8
(22) Date of filing: 12.09.1997
(51) Int. Cl.: A61C 17/08, F16L 11/12

(54) **A CANNULA FOR SALIVA SUCTION IN DENTAL APPLICATIONS**
SPEICHELABSAUGKANÜLE FÜR DEN ZAHNÄRTZLICHEN GEBRAUCH
CANULE POUR ASPIRATION SALIVAIRE DANS DES APPLICATIONS DENTAIRES

(30) Priority: 06.12.1996 IT VI960201
(43) Date of publication of application: 24.11.1999
(73) Proprietor: Euronda S.P.A., 36030 Montecchio Precalcino (IT)
(72) Inventor: TARDELLI, Idelbo, I-36016 Thiene (IT)
(74) Representative: Bonini, Ercole
(86) International application number: EP9705003
(87) International publication number: WO9824383

(56) References cited:
- WO-A-80/01453
- DE-U- 29 501 633
- FR-A- 1 571 461
- US-A- 3 344 523

## Description

The invention concerns a cannula for saliva suction in dental applications or similar and anyway useful for any medical or surgical operations which must be carried out at open mouth and using medicinal or detergent liquids.

It is known that the cannula for saliva suction is connected to the mouth of a patient which undergoes medications or dental operations, or similar, in which the operation involves the utilization of liquids, for example medicinal ones or water for cleaning, which must be removed gradually during the operation. For this purpose a cannula for saliva suction is positioned in the mouth of the patient, said cannula consisting of one tube suitably hook-shaped so that the suction side is introduced inside the oral cavity and it can suck up, through a low suction pressure in the tube, the liquids or the saliva which gradually are formed in the oral cavity.

Sometimes, such a cannula performs a double function, that is the suction of liquids in the mouth during the medical operation and the keeping down of the tongue. In this case a new profiling of the cannula different from the hook-shaped is necessary, that is a double curve shaped in which one curve maintains the tongue pushed down on his site, on the bottom of oral cavity, while the extremity of the cannula, always under suction, is addressed to the base of the oral cavity. Obviously from the above it is important that the cannula consists of a tube having a plastic structure to be modelled, when it is used, to comply with different needs or with a different conformation of the mouth of the patients under treatment.

The International publication WO 80/01453 discloses a cannula formed by a transparent or not transparent tube made of plastic material which incorporates in its thickness a steel flexible wire positioned along a generatrix of the tube. Transverse cuts 3 are arranged as suction openings in the tube wall. In such a way it is possible to realize the expected plastic deformation of the extremity of the tube whether making it hook-shaped or double curve shaped, when it is necessary to maintain the tongue pushed down. In order to avoid the contact of the extremity of the iron wire with the soft tissues of the mouth, the cannulas similar to the ones described in WO 80/01453 are provided with a suction cap on the ending part which sucks up the saliva and the liquids present in the mouth, said cap being formed in such a way to present some openings which communicate with the ending part of the tube.

The most significant disadvantage of such a cannula is that, being the cannula used just once because of hygienic reasons, the recycling of the material which forms the cannula is quite difficult being the said cannula, as it has been said, made of two different materials which are hardly detachable one another that is to say plastic and steel.

In order to overcome this inconvenience, a plastic cannula having a thin thickness has been realized presenting some concentric impressions to realize a stable bending without a spring-back and so with the purpose to provide manually the hook form necessary for the application of said cannula to the mouth of the patient. The inconvenience of such solution consists in that the cannula is fragile being, formed of plastic having a thin thickness because only with a thin thickness the concentric impressions can be realized along the external part to permit the bending.

The purpose of the present invention is to overcome the limits just mentioned.

Above all, it is intended to realize an absolutely non-toxic product which can be positioned without problems directly in contact with the pharynx and with the soft tissues of the patient mouth.

It is even intended to realize a product without recycling problems and so it must be made of compatible materials.

It is also intended that the final product is easily hand-modelled without any effort and conforms to the requirements in the application of the cannula to each patient.

All the mentioned purposes, and the others that will be better stressed later, are reached by a cannula for saliva suction in dental applications or similar comprising a suction tube for saliva and for medicinal or cleaning liquids, shaped in such a way to support itself when hooked to the edge of the open mouth of a patient and connected to an air suction system at low pressure which, according to the first claim, is characterized in that such a tube is made of two different plastic materials, the first material being soft and transparent and the second one having hardness greater than the first and capable to assure to the tube a stable and permanent plastic deformation till a subsequent hand-modelling.

Advantageously, according to an embodiment of the invention, the tube with which said cannula is made, is realized by coextrusion of two PVC types having different density.

Further characteristics and details of the invention will be better stressed in the description of a preferred embodiment of the invention given as an example but not as a restriction and described with reference to the attached drawings, wherein:
- fig. 1 shows a cannula according to a preferred embodiment of invention;
- fig. 2 shows an enlarged section of the cannula ;
- fig. 3 shows the cannula shaped as necessary;
- fig. 4 shows a different embodiment of the extremity of the cannula.

With reference to the above drawings it can be observed that the cannula for saliva suction according to a preferred embodiment of the invention is made of a tube of plastic material, indicated as a whole with 1, and realized using two different plastic materials. The first material, indicated with 2, is a transparent PVC and the second one, indicated with 3, is not transparent PVC having higher density and higher hardness.

The tube 1, is realized by the known process named coextrusion of both the soft material 2 and the harder material 3.

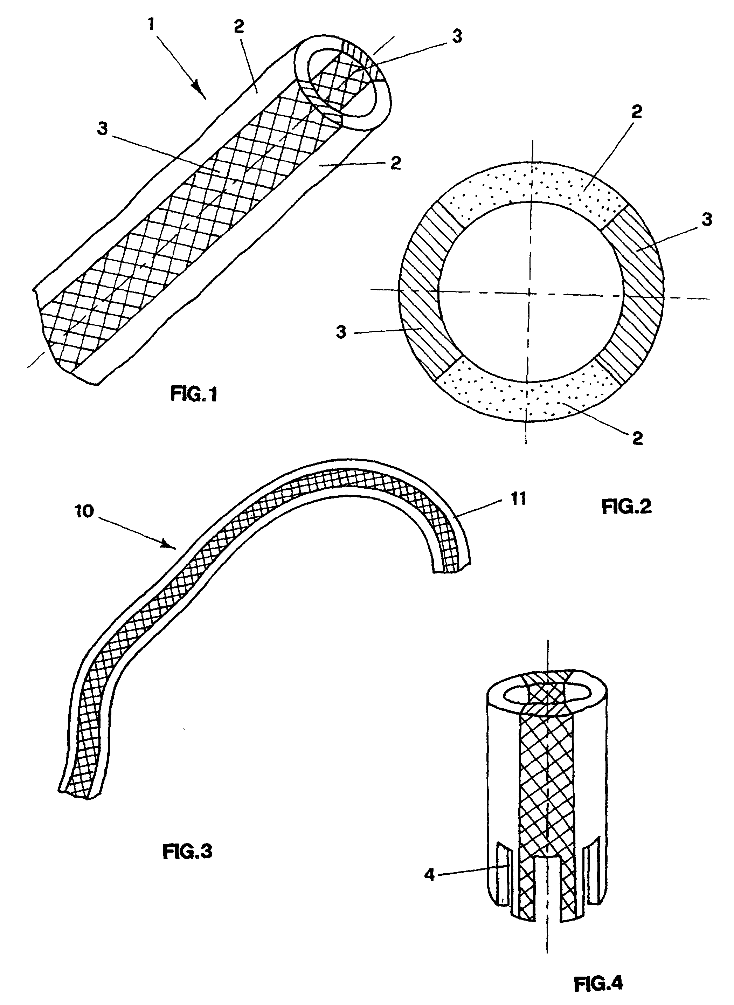

As it can be observed in the sections shown in figs. 1 and 2, the distribution of the second material having higher density, indicated with 3, is performed in two diametrically opposed areas with reference to the section of the tube and distributed along generatrix lines which are parallel to the axis of the tube. In such a way the material 3, being more resistant than the material 2 and having the capability to support a substantially stable plastic deformation or a permanent one till a subsequent modelling, realizes the plasticity of the cannula, as it can be observed in fig 3 in which the cannula 10 shows the extremity 11 being bending with reference to the remaining part of the tube, as to form a connection hook with the mouth of the patient. The two areas of harder PVC material are diametrically opposed and this fact, as it can be observed in figs. 2 and 3, allows the bending of the tube without kinks, and clearly this is an advantage for the operator.

In addition it can be observed that the preferred cannula is made without the metallic wire because the PVC material, of higher resistance, provides a permanent plastic deformation as the iron wire of the prior art. This fact allows the cannula to be applied directly to the mouth of the patient without a suction cap. The most, the extremity of said tube can presents some slits, indicated as 4, as it can be observed in fig. 4, able to guarantee the suction of the saliva or of other liquids when the extremity of the tube perfectly sticks on the bottom of the oral cavity.

It is evident that such a realization, as previously mentioned, enables the full recycling of the material after its use being the cannula made of different density PVC types which are self compatible.

## Claims

1. A cannula for saliva suction in dental applications or similar comprising a saliva suction tube (1) shapable in such a way to support itself when hooked to the edge of the open mouth of a patient and connectable to an air suction system at low pressure, **characterized in that** said tube is made of two different plastic materials (2, 3), the first material (2) being soft and the second one (3) having hardness greater than the first and capable to assure to the tube a stable and permanent plastic deformation till a subsequent hand-modelling.

2. A cannula for saliva suction according to the claim 1), **characterized in that** the second material (3) having hardness greater than the first is distributed on one or more than one areas following generatrix lines parallel to the axis of the tube.

3. A cannula for saliva suction according to the claim 2), **characterized in that** the areas of the tube made of the second material (3) are diametrically opposed with reference to the tube section.

4. A cannula for saliva suction according to any one of the preceding claims, **characterized in that** the material used for the realization of the cannula is PVC, respectively low density PVC for the first soft material and PVC with higher density than the first for the second plastic material having substantially permanent deformation.

5. A cannula for saliva suction according to any one of the preceding claims, **characterized in that** the extremity of the tube presents longitudinal slits (4) suited to facilitate the suction of the liquids contained in the oral cavity.

## Patentansprüche

1. Kanüle zur Speichelabsaugung in zahnärztlichen oder ähnlichen Anwendungen, mit einem Speichelabsaugtubus (1), der derart geformt ist, dass er sich selbst hält, wenn er im Winkel des geöffneten Munds eines Patienten eingehängt und an ein Niederdruck-Luftabsaugsystem angeschlossen wird, **dadurch gekennzeichnet, dass** der Tubus aus zwei verschiedenen Kunststoffen (2, 3) besteht, wobei das erste Material (2) weich ist und das zweite (3) härter ist als das erste sowie geeignet, eine stabile und dauerhafte Verformung des Tubus bis zu einer nächsten Modellierung von Hand zu gewährleisten.

2. Kanüle zur Speichelabsaugung gemäß Patentanspruch 1), **dadurch gekennzeichnet, dass** das zweite Material (3), das härter ist als das erste, auf einen oder mehrere Bereiche gemäß erzeugenden, parallel zur Tubusachse verlaufenden Linien verteilt ist.

3. Kanüle zur Speichelabsaugung gemäß Patentanspruch 2), **dadurch gekennzeichnet, dass** die aus dem zweiten Material (3) gefertigten Tubusbereiche bezüglich des Tubusquerschnitts einander diametral entgegengesetzt sind.

4. Kanüle zur Speichelabsaugung gemäß jedem der vorstehenden Patentansprüche, **dadurch gekennzeichnet, dass** das für die Kanüle benutzte Material PVC mit niedriger Dichte für das erste, weiche Material und PVC mit höherer Dichte als das erste für den zweiten Kunststoff mit im Wesentlichen permanenter Verformung ist.

5. Kanüle zur Speichelabsaugung gemäß jedem der vorstehenden Patentansprüche, **dadurch gekennzeichnet, dass** das Ende des Tubus Längsschlitze (4) aufweist, die geeignet sind, die Absaugung der in der Mundhöhe befindlichen Flüssigkeiten zu erleichtern.

## Revendications

1. Une canule pour l'aspiration de la salive pour applications odontologiques ou similaires comprenant un tuyau pour l'aspiration de la salive (1) ayant une forme indiquée pour se supporter tout seul quand il est fixé au lèvre de la bouche ouverte du patient et pour être relié à un système d'aspiration de l'air à basse pression, **caractérisée en ce que** ledit tuyau est réalisé en deux types de matériel différents (2, 3), le premier matériel (2) étant tendre et le second (3) étant plus rigide du premier et étant en mesure d'assurer au tuyau une déformation plastique fixe et permanente jusqu'au modelage manuel successif.

2. Une canule pour l'aspiration de la salive selon la revendication 1), **caractérisé en ce que** le second matériel (3) étant plus rigide du premier est distribué sur une ou plusieurs zones en suivant des lignes génératrices parallèles à l'axe du tuyau.

3. Une canule pour l'aspiration de la salive selon la revendication 2) **caractérisée en ce que** les zones du tuyau composé du second matériel (3) sont diamétralement opposées l'une à l'autre par rapport à la section du tuyau.

4. Une canule pour l'aspiration de la salive selon une quelconque des revendications précédentes, **caractérisée en ce que** le matériel utilisé pour la réalisation de la canule est le PVC, respectivement PVC à basse densité pour le premier matériel tendre et PVC ayant une densité plus élevée par rapport au premier pour le second matériel plastique ayant essentiellement une déformation permanente.

5. Une canule pour l'aspiration de la salive selon une quelconque des revendications précédentes, **caractérisée en ce que** l'extrémité du tuyau présente des fentes longitudinales (4) indiquées pour faciliter l'aspiration des liquides contenus dans la cavité orale.
